# FASCICULE DE BREVET EUROPEEN

(11) **EP 1 505 702 B1**
(45) Date de publication et mention de la délivrance du brevet: **30.08.2006**
(21) Numéro de dépôt: 04356132.3
(22) Date de dépôt: 20.07.2004
(51) Int. Cl.: H02G 3/04, H02G 3/06

(54) **Organe d'assemblage de deux goulottes en treillis de fils soudés, goulotte en treillis de fils soudés et chemin pour cables en comportant application**
Verbindungselement für zwei Kabelrinnen aus Drahtgitter, Kabelrinne aus Drahtgitter und Kabelkanal dieses enthaltend
Connection member for two cable trays of wire mesh, cable tray of wire mesh and cable channel using same

(30) Priorité: 21.07.2003 FR 0308866
(43) Date de publication de la demande: 09.02.2005
(73) Titulaire: Gewiss France SA, 21430 Liernais (FR)
(72) Inventeur: Lebrat, Jean-Pascal, 71640 Givry (FR); Garnier, André, 58230 Montsauche les Settons (FR)
(74) Mandataire: Myon, Gérard Jean-Pierre

(56) Documents cités:
- WO-A-02/067398
- US-B1- 6 193 434
- US-B1- 6 247 871

## Description

La présente invention se rapporte au domaine des chemins de câbles constitués d'une succession de goulottes en treillis de fils soudés ensemble. Plus précisément, elle concerne un organe d'assemblage de deux goulottes en treillis de fils soudés, une goulotte portant un tel organe d'assemblage, ainsi qu'un chemin de câbles comprenant cette goulotte et une autre goulotte que l'organe d'assemblage maintient assemblées.

Dans la demande de brevet français n° 2 687 207, il est décrit une éclisse d'assemblage de deux goulottes, qui sont disposées dans le prolongement l'une de l'autre et dont chacune est constituée d'un treillis de fils longitudinaux et transversaux soudés les uns aux autres. Cette éclisse, résultant de la mise en forme d'un flan métallique, définit quatre pattes de clipage disposées le long d'une direction axiale, ainsi que deux rebords, dont chacun est recourbé de manière à délimiter l'une de deux gorges dans le prolongement l'une de l'autre. Le montage de cette éclisse commence par l'accrochage simultané d'un rebord recourbé à un fil longitudinal d'un fond d'une des goulottes et de l'autre rebord recourbé à un fil longitudinal d'un fond de l'autre goulotte. Ensuite, tout en maintenant ces rebords accrochés, on bascule l'éclisse vers le haut jusqu'à ce que les pattes de clipage se clipent sur des fils longitudinaux de côtés des goulottes.

Il ressort de ce qui précède que l'éclisse ne peut être installée qu'après les deux goulottes. De ce fait, elle ne peut pas être pré-montée sur l'une de ces goulottes.

Dans WO-A-02/067398 est décrit une éclisse d'assemblage, ainsi que deux chemins de câbles assemblés à l'aide de deux exemplaires de cette éclisse. Chaque chemin de câbles est constitué d'un treillis de fils soudés. Les deux éclisses d'assemblage peuvent être prémontées par clipage chacune sur un fil de trame de l'un des chemins de câble. Une fois cela fait, elles sont rotatives. Elles présentent toutefois l'inconvénient d'être coûteuses. De plus, l'installation de chacune d'elles comporte deux opérations fastidieuses de pliage, à savoir une opération de pliage d'une languette et une opération de pliage d'une patte.

L'invention a donc au moins pour but de permettre de réduire le coût d'un organe d'assemblage au moyen duquel deux goulottes peuvent être assemblées seulement après que cet organe d'assemblage a été pré-monté sur l'une d'elles.

A cet effet, l'invention a pour objet un organe d'assemblage de première et deuxième goulottes mises bout à bout et constituées chacune d'un treillis de fils soudés ensemble.

Cet organe d'assemblage est caractérisé en ce qu'il comporte un fil métallique mis en forme de manière à comprendre :
- un premier tronçon formant un premier crochet entourant partiellement un axe de pivotement de l'organe d'assemblage et prévu pour s'accrocher à l'un des fils de la deuxième goulotte, et
- un deuxième tronçon prolongeant le premier tronçon et ayant la forme d'un enroulement qui constitue des moyens de montage à pivotement de l'organe d'assemblage sur l'un des fils de la première goulotte de telle manière que cet organe d'assemblage puisse pivoter sur ce fil, autour dudit axe de pivotement.

D'autres caractéristiques avantageuses de cet organe d'assemblage sont définies par les revendications 2 à 6 annexées.

L'invention a également pour objet une goulotte pour chemin pour câbles ou analogues, cette goulotte comprenant des fils longitudinaux et transversaux soudés en un treillis qui définit un fond de la goulotte, ainsi que des premier et deuxième côtés montant à partir de ce fond, un fil d'extrémité parmi les fils transversaux définissant un bord d'extrémité de la goulotte, caractérisée en ce qu'elle porte au moins un organe d'assemblage tel que défini ci-dessus, cet organe d'assemblage étant monté à pivotement sur le fil transversal d'extrémité.

De plus l'invention a pour objet un chemin pour câbles ou analogues, comprenant au moins des première et deuxième goulottes assemblées, la première goulotte comprenant des fils longitudinaux et transversaux soudés en un treillis qui définit un fond de la goulotte, ainsi que des premier et deuxième côtés montant à partir de ce fond, un fil d'extrémité parmi les fils transversaux de la première goulotte définissant un bord d'extrémité de cette première goulotte, caractérisé en ce que la deuxième goulotte est telle que définie ci-dessus, le premier crochet de l'organe d'assemblage étant accroché au fil d'extrémité de la première goulotte qu'au moins cet organe d'assemblage maintient assemblée à la deuxième goulotte .

D'autres caractéristiques avantageuses de ce chemin pour câbles et analogues sont définies par les revendications 9 à 11 annexées.

L'invention sera bien comprise à la lecture de la description qui va suivre, donnée uniquement à titre d'exemple et faite en se référant aux dessins annexés, sur lesquels :
- la figure 1 est une vue en perspective d'un tronçon qui fait partie d'un chemin de câbles conforme à l'invention et dans lequel deux goulottes successives sont maintenues assemblées par deux organes d'assemblage identiques, également conformes à l'invention ;
- la figure 2 est une vue en perspective de l'un des deux organes d'assemblage représentés à la figure 1 ;
- la figure 3 est une vue de dessus de l'organe d'assemblage représenté seul à la figure 2 ;
- les figures 4, 5 et 6 illustrent trois étapes successives de la mise en place de l'organe d'assemblage des figures 2 et 3 sur une goulotte vue par une de ses extrémités ;
- la figure 7 est une vue de dessus du tronçon représenté à la figure 1 et illustre une étape de l'assemblage des deux goulottes de ce tronçon au moyen des deux organes d'assemblage, et
- la figure 8 est une vue en coupe longitudinale d'un tronçon d'un chemin de câbles selon une variante de réalisation de l'invention.

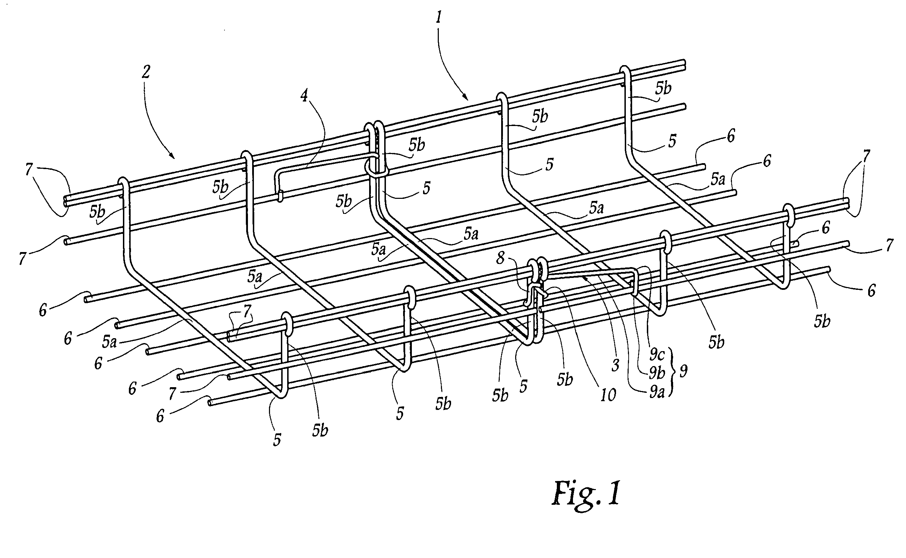

Sur la figure 1, un tronçon de chemin pour câbles ou analogues comporte deux goulottes 1 et 2 successives, identiques et partiellement représentées, que maintiennent assemblées deux organes identiques d'assemblage 3 et 4 conformes à l'invention.

Chacune des goulottes 1 et 2 est constituée d'un treillis résultant du soudage de fils métalliques longitudinaux à des fils métalliques transversaux 5. Certains fils longitudinaux, référencés 6, font partie du fond que comporte chacune de ces goulottes 1 et 2. Les autres fils longitudinaux sont référencés 7 et appartiennent à l'un des deux côtés que possèdent chacune des goulottes 1 et 2.

Chaque fil transversal 5 a globalement la forme d'un U et comprend deux tronçons 5b formant montants, ainsi qu'un tronçon 5a qui forme traverse et relie ces tronçons 5b l'un à l'autre. Ce tronçon 5a fait partie du fond de l'une des deux goulottes 1 et 2, tandis que l'un et l'autre tronçon 5b appartiennent respectivement à l'un et l'autre côté de la goulotte 1 ou de la goulotte 2. A chaque extrémité de chacune des goulottes 1 et 2, un fil transversal d'extrémité 5 définit un bord d'extrémité de la goulotte 1 ou 2 dont il fait partie.

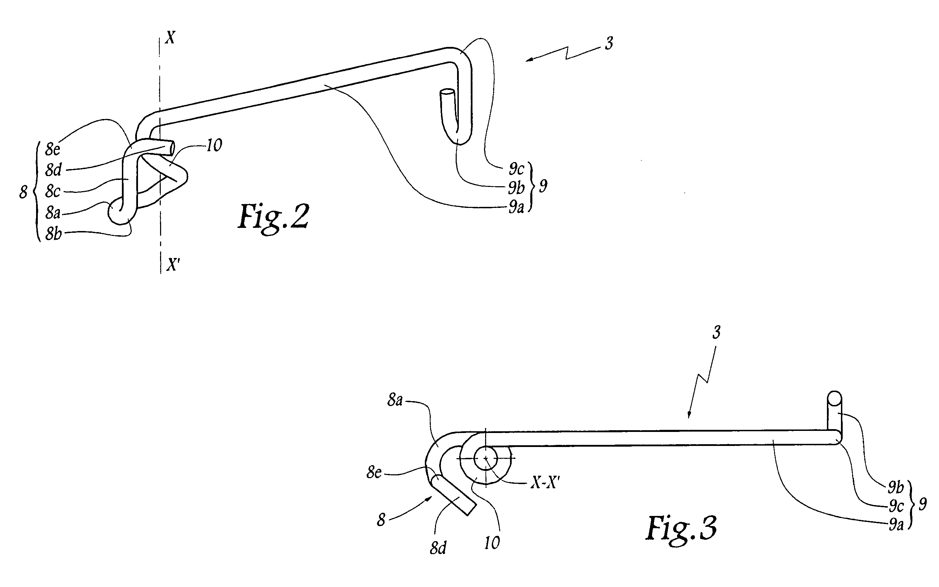

L'organe d'assemblage 3, auquel est identique l'organe d'assemblage 4, est représenté seul sur les figures 2 et 3. Il résulte de la mise en forme d'un fil métallique et comporte un crochet 8 et un bras 9 qu'un enroulement hélicoïdal 10 relie l'un à l'autre et qui sont disposés sensiblement à l'opposé l'un de l'autre par rapport à cet enroulement 10.

L'enroulement 10 est destiné à s'enrouler à jeu réduit sur un tronçon 5b d'un fil transversal 5 d'extrémité, de telle manière que l'organe d'assemblage 3 puisse pivoter autour de ce fil transversal 5 d'extrémité.

Le crochet 8 comprend trois tronçons, dont un est référencé 8a et prolonge une extrémité de l'enroulement 10. Ce tronçon 8a se courbe autour de l'axe X-X' de pivotement de l'organe d'assemblage 3, de sorte que le crochet 8 entoure cet axe de pivotement X-X' sur plus de 90°. Un coude 8b sensiblement à angle droit relie le tronçon 8a à un tronçon sensiblement rectiligne 8c du crochet 8. Ce tronçon sensiblement rectiligne 8c s'étend le long de l'enroulement 10, de manière sensiblement parallèle à l'axe de pivotement X-X'. Le crochet 8 se termine par un tronçon 8d qu'un coude 8e sensiblement à angle droit raccorde au tronçon 8c et qui présente la forme d'un doigt orthogonal à l'axe de pivotement X-X'.

Le bras 9 comprend un tronçon sensiblement rectiligne 9a et se termine par un tronçon d'extrémité en forme de crochet 9b. Ce crochet 9b s'étend dans un plan sensiblement perpendiculaire au tronçon 9a et sensiblement parallèle à l'axe de pivotement X-X', du fait de la présence d'un coude sensiblement à angle droit 9c qui le relie à ce tronçon 9a.

Conformément au but de l'invention, chacun des organes d'assemblage 3 et 4 est particulièrement peu coûteux à fabriquer, puisqu'il est peu onéreux de mettre en forme un fil métallique, lequel présente en outre l'avantage d'avoir un aspect qui se marie avec les goulottes 1 et 2.

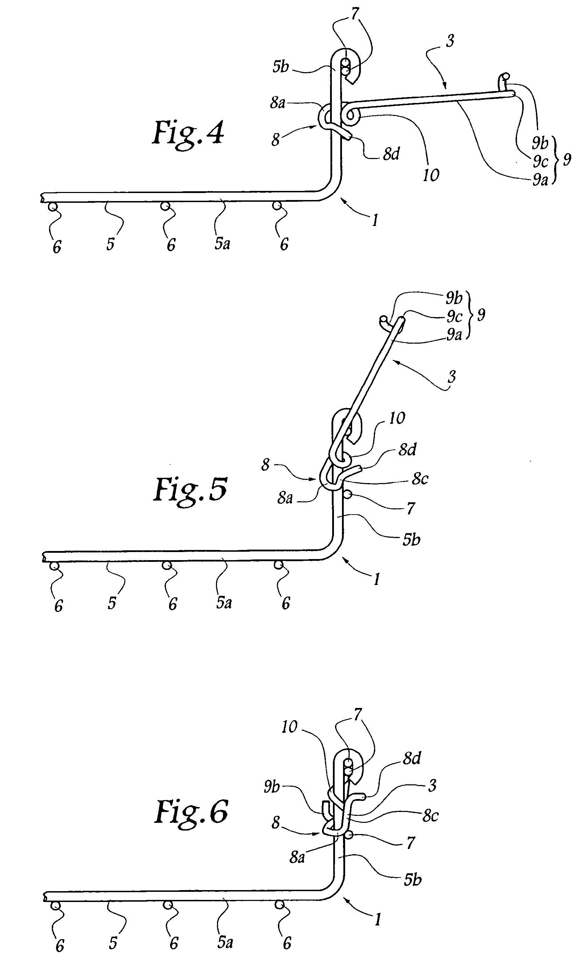

Les organes d'assemblage 3 et 4 peuvent être montés sur les goulottes 1 et 2 avant l'assemblage de ces dernières. Pour monter l'organe d'assemblage 3 sur la goulotte 1, on commence par insérer le tronçon 5b d'un fil transversal d'extrémité de la goulotte 1 entre le crochet 8 et l'enroulement 10, ce qu'illustre la figure 4. Ensuite, en tirant parti de ce que les spires consécutives de l'enroulement 10 sont espacées les unes des autres, on enroule cet enroulement 10 sur le tronçon 5b, ce qu'illustre la figure 5. Après cela, l'organe d'assemblage 3 est installé et tel que représenté à la figure 6. Il peut alors pivoter sur le tronçon 5b autour duquel s'enroule à jeu réduit son enroulement 10.

La mise en place de l'organe d'assemblage 4 sur la goulotte 2 est identique à celle qui vient d'être décrite.

Il ressort de ce qui précède que l'installation d'un organe d'assemblage 3 ou 4 sur une goulotte 1 ou 2 est simple et rapide à exécuter, ce qui est avantageux. Cette installation peut être effectuée soit en usine, soit sur chantier, c'est-à-dire sur le site ou dans le bâtiment que l'on équipe d'un chemin de câbles conforme à l'invention.

Après qu'il a été installé sur la goulotte 1 ou 2, l'organe d'assemblage 3 ou 4 ne dépasse pas ou que faiblement de la goulotte 1 ou 2 qu'il équipe. En d'autres termes, cette goulotte 1 ou 2 munie de l'organe d'assemblage 3 ou 4 présente sensiblement le même encombrement que si elle était dépourvue de cet organe d'assemblage 3 ou 4, ce qui est avantageux.

Avant d'être assemblées, les goulottes 1 et 2 sont placées dans le prolongement l'une de l'autre. Ensuite, on déplace l'une d'elle vers l'autre, lors de quoi le bras 9 de l'organe d'assemblage 3 et celui de l'organe d'assemblage 4 sont placés à l'extérieur des goulottes 1 et 2, de manière à s'étendre selon des directions sensiblement perpendiculaires à la direction longitudinale des goulottes 1 et 2.

L'étape qui suit consiste à assembler deux côtés attenants des goulottes 1 et 2 à l'aide de l'organe 3 et, en opérant de la même manière, à assembler les deux autres côtés des goulottes 1 et 2 à l'aide de l'organe 4.

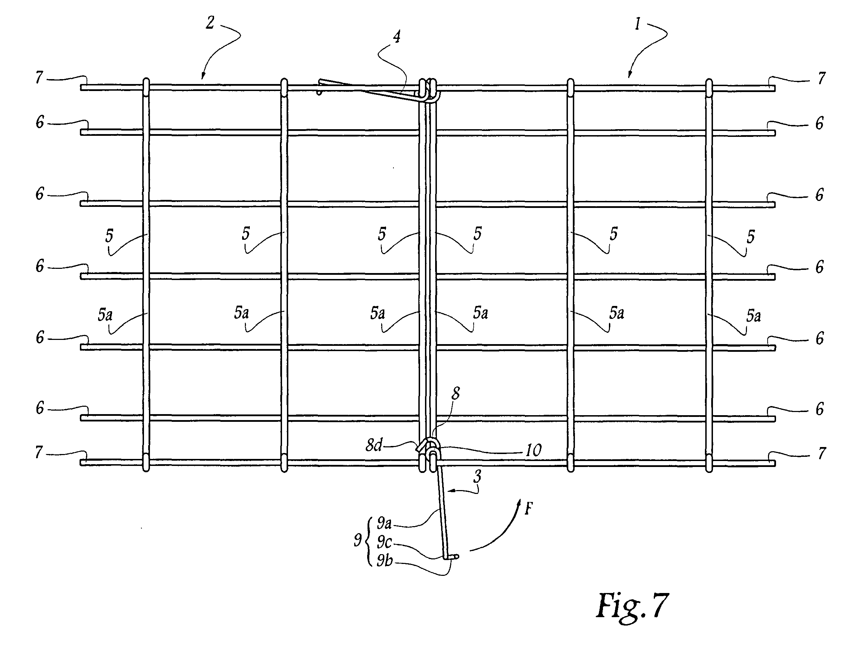

Sur la figure 7, cette étape, qui est la dernière, est à moitié réalisée, puisque l'organe d'assemblage 4 se trouve déjà dans sa position définitive. Il reste néanmoins à assembler deux côtés attenants des goulottes 1 et 2 à l'aide de l'organe 3. Pour ce faire, on commence par faire pivoter cet organe 3 en basculant manuellement le bras 9 de celui-ci vers la goulotte 1, ce qu'illustre la flèche F. Lors de cette étape, le crochet 8 s'accroche au tronçon 5b d'un fil transversal 5 d'extrémité de la goulotte 2. Ensuite, en courbant élastiquement vers le bas, puis en basculant et enfin en relâchant le tronçon sensiblement rectiligne 9a du bras 9, on accroche le crochet 9b à un fil longitudinal 7, après quoi les goulottes 1 et 2 sont assemblées, c'est-à-dire telles qu'illustrées à la figure 1.

Il ressort de ce qui précède que l'assemblage des goulottes 1 et 2 à l'aide des organes d'assemblage 3 et 4 présente l'avantage d'être particulièrement simple et rapide à effectuer, en particulier lorsque ces organes d'assemblage 3 et 4 ont été pré-montés en usine sur les goulottes 1 et 2.

Sur la figure 1, l'organe d'assemblage 4 se comporte de la même manière que l'organe d'assemblage 3, que son crochet 9b immobilise. Le tronçon sensiblement rectiligne 8c s'applique sur le fil transversal 5 auquel est accroché le crochet 8. L'assemblage des goulottes 1 et 2 par les organes 3 et 4 est robuste et fiable, ce qui est avantageux.

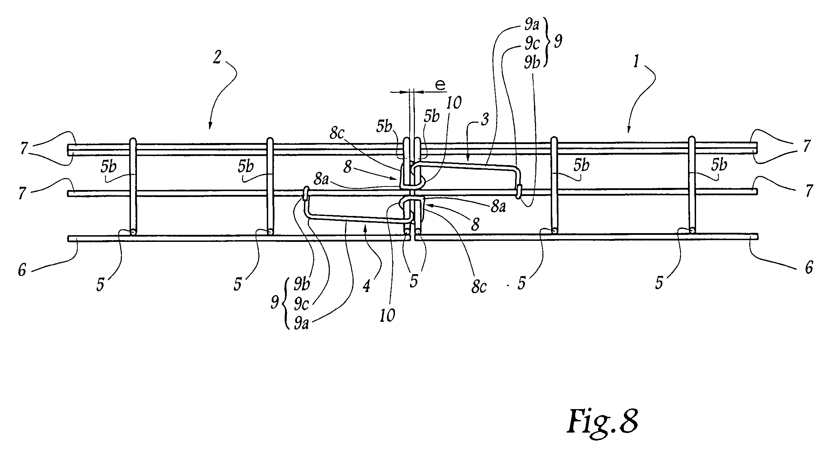

Sur la figure 8, les goulottes 1 et 2 précédemment décrites font partie d'un chemin selon une variante de réalisation de l'invention. Ce chemin pour câbles se distingue de celui représenté à la figure 1 en ce que non pas deux mais quatre exemplaires identiques de l'organe 3 maintiennent assemblées les goulottes 1 et 2. Deux de ces quatre exemplaires identiques de l'organe 3 assemblent deux côtés attenant des goulottes 1 et 2. Les deux autres exemplaires de l'organe 3 assemblent les deux autres côtés des goulottes 1 et 2 et ne sont pas visibles sur la figure 8.

L'un des organes d'assemblage représenté à la figure 8 est monté sur un tronçon 5b d'un fil transversal 5 d'extrémité de la goulotte 1. Il est installé exactement comme le sont les organes d'assemblage 3 et 4 de la figure 1. L'autre organe d'assemblage 3 représenté sur la figure 8 est monté à pivotement sur un tronçon 5b d'un fil transversal 5 d'extrémité de la goulotte 2. Son crochet 9b est accroché à un fil longitudinal 7 de cette goulotte 2. Le crochet 8 de chaque organe d'assemblage 3 représenté à la figure 8 est accroché à la portion 5b sur laquelle est monté l'autre organe d'assemblage 3 représenté à cette figure 8. Les enroulements 10 des organes d'assemblage 3 représentés à cette figure 8 forment des entretoises inférieure ou supérieure, qui maintiennent un écart e entre un fil transversal 5 d'extrémité de la goulotte 1 et un fil transversal 5 d'extrémité de la goulotte 2.

## Revendications

1. Organe d'assemblage de première et deuxième goulottes (1, 2) mises bout à bout et constituées chacune d'un treillis de fils soudés ensemble (5, 6, 7), cet organe d'assemblage étant **caractérisé en ce qu'**il comporte un fil métallique mis en forme de manière à comprendre :
- un premier tronçon formant un premier crochet (8) entourant partiellement un axe (X-X') de pivotement de l'organe d'assemblage et prévu pour s'accrocher à l'un des fils (5) de la deuxième goulotte, et
- un deuxième tronçon prolongeant le premier tronçon (8) et ayant la forme d'un enroulement (10) qui constitue des moyens de montage à pivotement (F) de l'organe d'assemblage sur l'un des fils (5) de la première goulotte de telle manière que cet organe d'assemblage puisse pivoter sur ce fil (5), autour dudit axe de pivotement (X-X').

2. Organe selon la revendication 1, **caractérisé en ce qu'**il comporte des moyens (9b) pour son immobilisation dans une position où le premier crochet (8) est accroché au fil (5) de la deuxième goulotte.

3. Organe selon la revendication 1 ou 2, **caractérisé en ce qu'**il comporte un bras (9) qui s'étend depuis les moyens (10) de montage de cet organe d'assemblage, en s'éloignant de l'axe de pivotement (X-X'), et que l'on peut saisir manuellement afin de faire pivoter l'organe d'assemblage autour de cet axe de pivotement (X-X').

4. Organe selon les revendications 2 et 3, **caractérisé en ce que** ledit fil métallique comprend :
- un troisième tronçon (9a) prolongeant le deuxième tronçon (10) et formant ledit bras (9), et
- un quatrième tronçon prolongeant le troisième tronçon et formant un deuxième crochet (9b) que comportent lesdits moyens pour l'immobilisation de l'organe d'assemblage, dont est pourvu ledit bras (9) et qui est disposé de manière à pouvoir être accroché à l'un des fils d'une goulotte.

5. Organe selon la revendication 4, **caractérisé en ce que** ledit troisième tronçon (9a) est apte à être courbé élastiquement de manière à permettre d'accrocher ledit deuxième crochet (9b).

6. Organe selon l'une quelconque des revendications précédentes, **caractérisé en ce qu'**un tronçon (8c) du premier crochet (8) s'étend de manière sensiblement parallèle à l'axe de pivotement (X-X').

7. Goulotte pour chemin pour câbles ou analogues, cette goulotte comprenant des fils longitudinaux (6, 7) et transversaux (5) soudés en un treillis qui définit un fond de la goulotte, ainsi que des premier et deuxième côtés montant à partir de ce fond, un fil d'extrémité (5) parmi les fils transversaux (5) définissant un bord d'extrémité de la goulotte, **caractérisée en ce qu'**elle porte au moins un organe d'assemblage (3, 4) selon l'une quelconque des revendications précédentes, cet organe d'assemblage (3, 4) étant monté à pivotement sur le fil transversal d'extrémité (5).

8. Chemin pour câbles ou analogues, comprenant au moins des première et deuxième goulottes (1, 2) assemblées, la première goulotte (2) comprenant des fils longitudinaux (6, 7) et transversaux (5) soudés en un treillis qui définit un fond de la goulotte, ainsi que des premier et deuxième côtés montant à partir de ce fond, un fil d'extrémité (5) parmi les fils transversaux (5) de la première goulotte (2) définissant un bord d'extrémité de cette première goulotte (2), **caractérisé en ce que** la deuxième goulotte (1) est selon la revendication 7, le premier crochet (8) de l'organe d'assemblage (3) étant accroché au fil d'extrémité (5) de la première goulotte (2) qu'au moins cet organe d'assemblage (3) maintient assemblée à la deuxième goulotte (1).

9. Chemin selon la revendication 8, **caractérisé en ce que** l'organe d'assemblage (3) maintient assemblés le premier côté de la première goulotte (2) et le premier côté de la deuxième goulotte (1), un deuxième organe d'assemblage (4) selon l'une quelconque des revendications 1 à 6 maintenant assemblés le deuxième côté de la première goulotte (2) et le deuxième côté de la deuxième goulotte (1).

10. Chemin selon la revendication 9, **caractérisé en ce qu'**également un troisième organe d'assemblage (3) selon l'une quelconque des revendications 1 à 6 maintient assemblés le premier côté de la première goulotte (2) et le premier côté de la deuxième goulotte (1), ce troisième organe d'assemblage (3) étant monté à pivotement sur le fil d'extrémité (5) de la première goulotte (2), le premier crochet (8) du troisième organe d'assemblage (3) étant accroché au fil d'extrémité (5) de la deuxième goulotte (1) .

11. Chemin selon l'une quelconque des revendications 8 à 10, **caractérisé en ce que** le ou chaque organe d'assemblage (3, 4) est selon la revendication 4 ou 5, le deuxième crochet (9b) de l'organe d'assemblage (3, 4) ou de chaque organe d'assemblage (3, 4) étant accroché à un fil longitudinal (7) de l'un des premier et deuxième côtés de l'une des première et deuxième goulottes (1, 2).

## Claims

1. Connection member for first and second trays (1, 2) put end to end and each constituted by a mesh of wires joined together, this connection member being **characterised in that** it comprises a metallic wire shaped so as to comprise:
a first part forming a first hook partly surrounding a pivot axis (X - X') of the connection member and capable of hitching to one of the wires (5) of the second tray, and
a second part extending the first part (8) and having the form of a coil (10) which constitutes means for the pivotal mounting of the connection member on one of the wires (5) of the first tray in such manner that the connection member can pivot on this wire (5), about the said pivot axis (X-X').

2. Member according to claim 1, **characterised** that it comprises means (9b) for its fixing in a position where the first hook (8) is hitched to the wire (5) of the second tray.

3. Member according to claim 1 or 2, **characterised in that** it comprises an arm (9) which extends from the means (10) for the mounting of this member, in alignment with the pivot axis (X-X'), and **in that** it can be manually gripped so that the connection member can be made to pivot about this pivot axis (X-X').

4. Member according to claims 2 and 3, **characterised in that** the said metal wire comprises:
a third part (9a) extending the second part (10) and forming the said arm (9), and
a fourth part extending the third part and forming a second hook (9b) which constitutes the said means for fixing of the connection member, in which is provided the said arm (9) and which is disposed so that it can be hitched to one of the wires of a tray.

5. Member according to claim 4, **characterised in that** the said third part (9a) is adapted to be elastically bent so as to allow the hitching of the said second hook (9b).

6. Member according to any foregoing claim, **characterised in that** a part (8c) of the first hook (8) extends in a manner substantially parallel to the pivot axis (X-X').

7. Tray for a channel for cables or the like, this tray comprising longitudinal wires (6, 7) and transverse wires (5) joined in a mesh which defines a base of the tray, and furthermore first and second sides rising up from the base, an end wire (5) among the transverse wires defining an extreme edge of the tray, **characterised in that** it carries at least one connection member (3, 4) according to any one of the foregoing claims, this connection member (3, 4) being mounted for pivoting on the transverse end wire (5).

8. Channel for cables or the like, comprising at least first and second trays (1, 2) joined together, the first tray (2) comprising longitudinal wires (6, 7) and transverse wires (5) joined in a mesh which defines a base of the tray, and furthermore first and second sides rising up from the base, an extreme end wire (5) among the transverse wires (5) of the first tray (2) defining an extreme edge of this first tray (2), **characterised in that** the second tray (1) is according to claim 7, the first hook (8) of the connection member (3) being hitched to the end wire (5) of the first tray (2) so that at least this connection member (3) stays connected to the second tray (1).

9. Channel according to claim 8, **characterised in that** the connection member (3) holds together the first side of the first tray (2) and the first side of the second tray (1), a second connection member (4) according to any one of claims 1 to 6 holding together the second side of the first tray (2) and the second side of the second tray (1).

10. Channel according to claim 9, **characterised in that** similarly a third connection member (3) according to any one of claims 1 to 6 holds together the first side of the first tray (2) and the first side of the second tray (1), this third connection member (3) being pivotally mounted on the extreme end wire (5) of the first tray (2), the first hook (8) of the third connecting member (3) being hitched to the end wire (5) of the second tray (1).

11. Channel according to any one of claims 8 to 10, **characterised in that** the or each connection member (3 ,4) is according to claim 4 or 5, the second hook (9b) of the connection member (3, 4) or each connection member (3, 4) being hitched to a longitudinal wire (7) of one of the first and second sides of one of the first and second trays (1, 2).

## Patentansprüche

1. Element zum Verbinden einer ersten und einer zweiten Rinne (1, 2), deren Enden aneinander stoßen und die jeweils aus einem Gitter aus zusammengeschweißten Drähten (5, 6, 7) bestehen, wobei dieses Verbindungselement **dadurch gekennzeichnet ist, dass** es einen metallischen Draht aufweist, der in eine derartige Form gebracht ist, dass er umfasst:
- einen ersten Abschnitt, der einen ersten Haken (8) bildet, der teilweise eine Achse (X-X') zum Schwenken des Verbindungsorgans umgibt und vorgesehen ist, um sich an einen der Drähte (5) der zweiten Rinne anzuhaken und
- einen zweiten Abschnitt, der den ersten Abschnitt verlängert und die Form einer Wicklung (10) aufweist, die Mittel zur schwenkbaren (F) Montage des Verbindungselements an einem der Drähte (5) der ersten Rinne in der Weise bildet, dass dieses Verbindungselement um diesen Draht (5) an die Schwenkachse (X-X') herumschwenken kann.

2. Element nach Anspruch 1, **dadurch gekennzeichnet, dass** es Mittel (9b) für seine Festlegung in einer Position umfasst, in der der erste Haken (8) an den Draht (5) der zweiten Rinne angehängt ist.

3. Element nach Anspruch 1 oder Anspruch 2, **dadurch gekennzeichnet, dass** es einen Arm (9) aufweist, der sich von den Mitteln (10) zum Montieren dieses Verbindungselements erstreckt, indem er sich von der Schwenkachse (X-X') entfernt und den man manuell erfassen kann, um das Verbindungselement um diese Schwenkachse (X-X') zu schwenken.

4. Element nach den Ansprüchen 2 und 3, **dadurch gekennzeichnet, dass** der Metalldraht umfasst:
- einen dritten Abschnitt (9a), der den zweiten Abschnitt (10) verlängert und den Arm (9) bildet, und
- einen vierten Abschnitt, der den dritten Abschnitt verlängert und einen zweiten Haken (9b) bildet, den die Mittel zur Festlegung des Verbindungselements umfassen, für den der Arm (9) vorgesehen ist und der derart angeordnet ist, dass er an einen der Drähte einer Rinne gehakt werden kann.

5. Element nach Anspruch 4, **dadurch gekennzeichnet, dass** dieser dritte Abschnitt (9a) geeignet ist, elastisch gebogen zu werden, derart, dass ein Anhaken des zweiten Hakens (9b) ermöglicht wird.

6. Element nach einem beliebigen der vorhergehenden Ansprüche, **dadurch gekennzeichnet, dass** ein Abschnitt (8c) des ersten Hakens (8) sich in einer im Wesentlichen parallelen Weise zur Schwenkachse (X-X') erstreckt.

7. Rinne für einen Kanal für Kabel oder dergleichen, wobei diese Rinne Längs- (6, 7) und Querdrähte (5) umfasst, die zu einem Gitter zusammengeschweißt sind, das einen Boden der Rinne sowie eine erste und eine zweite von diesem Boden sich erhebende Seiten abgrenzt, wobei ein Enddraht (5) unter den Querdrähten (5) einen Endrand der Rinne bildet, **dadurch gekennzeichnet, dass** sie mindestens ein Verbindungselement (3, 4) nach einem beliebigen der vorhergehenden Ansprüche trägt, wobei dieses Verbindungselement (3, 4) schwenkbar an den quer liegenden Enddraht (5) montiert ist.

8. Kanal für Kabel oder dergleichen, mindestens eine erste und eine zweite Rinne umfassen, die zusammengesetzt sind, wobei die erste Rinne (2) Längs- (6, 7) und Querdrähte (5) umfasst, die zu einem Gitter zusammengeschweißt sind, das einen Boden der Rinne sowie eine erste und eine zweite von diesem Boden sich erhebende Seiten abgrenzt, wobei ein Enddraht (5) unter den Querdrähten (5) der erste Rinne (2) einen Endrand dieser ersten Rinne (2) bildet, **dadurch gekennzeichnet, dass** die zweite Rinne (1) nach Anspruch 7 ausgebildet ist, wobei der erste Haken (8) des Verbindungselements (3) an den Enddraht (5) der ersten Rinne (2) gehakt ist, die mindestens von diesem Verbindungselement (3) mit der zweiten Rinne (1) verbunden gehalten wird.

9. Kanal nach Anspruch 8, **dadurch gekennzeichnet, dass** dieses Verbindungselement (3) die erste Seite der ersten Rinne (2) und die erste Seite der zweiten Rinne (1) zusammenhält, wobei ein zweites Verbindungselement (4) nach einem beliebigen der Ansprüche 1 bis 6 die zweite Seite der ersten Rinne (2) und die zweite Seite der zweiten Rinne (1) zusammenhält.

10. Kanal nach Anspruch 9, **dadurch gekennzeichnet, dass** gleichfalls ein drittes Verbindungselement (3) nach einem beliebigen der Anspräche 1 bis 6 die erste Seite der ersten Rinne (2) und die erste Seite der zweiten Rinne (1) zusammenhält, wobei das Verbindungselement (3) schwenkbar an dem Enddraht (5) der ersten Rinne (2) montiert ist und der erste Haken (8) des dritten Verbindungselements an den Enddraht (5) der zweiten Rinne (1) gehakt ist.

11. Kanal nach einem beliebigen der Ansprüche 8 bis 10, **dadurch gekennzeichnet, dass** das oder jedes Verbindungselement (3, 4) nach dem Anspruch 4 oder 5 ausgebildet ist, wobei der zweite Haken (9b) des Verbindungselements (3, 4) oder jedes Verbindungselements (3, 4) an einen Längsdraht (7) der ersten oder zweiten Seite der ersten oder zweiten Rinne (1, 2) gehakt ist.
